# EUROPEAN PATENT SPECIFICATION

(11) **EP 2 784 216 B1**
(45) Date of publication and mention of the grant of the patent: **19.04.2017**
(21) Application number: 14159338.4
(22) Date of filing: 13.03.2014
(51) Int. Cl.: D21H 19/38, B32B 29/00, D21H 19/44, D21H 21/08

(54) **PAPER COATING FORMULATION**
PAPIERBESCHICHTUNGSFORMULIERUNG
FORMULATION DE REVÊTEMENT DE PAPIER

(30) Priority: 27.03.2013 US 201361805638 P
(43) Date of publication of application: 01.10.2014
(73) Proprietor: Dow Global Technologies LLC, Midland, MI 48674 (US)
(72) Inventor: ROoper III, John A., Midland, MI Michigan 48642 (US); Vivek, Kalihari, Midland, MI Michigan 48642 (US)
(74) Representative: Hoggins, Mark Andrew

(56) References cited:
- EP-A1- 1 323 674
- EP-A1- 1 911 881
- WO-A1-02/44470
- US-A- 2 620 316
- US-A- 4 183 766
- US-A1- 2005 223 947
- US-A1- 2007 212 969

## Description

### Background of the Invention

Titanium dioxide (TiO₂) is used as a pigment in paperboard coatings on darker substrates such as recycled board and unbleached Kraft board to improve the optical properties such as brightness, opacity, and appearance. In addition, TiO₂ is used in lightweight coated paper to improve opacity, or in premium coated paper grades to improve the brightness and appearance. Motivated by the high cost of TiO₂, papermakers are looking for ways to either reduce its usage or improve its efficiency or both.

In the absence of modifiers such as dispersants, TiO₂ particles will crowd, leading to inefficient hiding. However, even with well dispersed TiO₂ there can be crowding of TiO₂ particles as the level of TiO₂ is increased. Furthermore, it is known, for example, (2001 TAPPI Coating Conference Paper by Imerys on "Optimum Dispersion In Blade Coating Operations; " also, Chapter 3 on "Inorganic Salt Dispersants " in Practical Dispersion: A Guide to Understanding and Formulating Slurries by R. F. Conley, Wiley Press) that over-dispersing of a coating will cause pigment particles to flocculate, which can lead to an improvement in coating brightness on the order of 0.5 to 1.5 points. This improvement in brightness, however, is attributed to an increase in the porosity of the coating, which increases the amount of light scattering from air voids, and not to the increased efficiency of TiO₂ dispersion in the coating. Furthermore, the brightness advantage realized from using high levels of dispersants is greatly reduced after calendaring to less than 1 point because the voids created upon the addition of the dispersant are removed during the calendaring process.

Paperboard coatings are disclosed in each of WO 02/4470 A1, EP 1911 881 A1, US 2,620,316, and US 4.183,766. However, none of these documents discloses the coating formulation of the present invention. Further, US 8,043,476 discloses a paper or paperboard coating formulation with improved viscosity stability comprising a phosphate or phosphonate functionalized acrylic polymer binder, TiO₂, and a polyphosphate dispersant. Although the phosphate or phosphonate functionality is known to enhance adsorptivity of the binder to the TiO₂, thereby improving the efficiency of its usage, the presence of phosphates or phosphonates often adversely affect viscosity stability of the binder and water sensitivity of the coating. Moreover, latexes prepared with the commonly used phosphate monomer, phosphoethyl methacrylate (PEM), invariably contain impurities that are of concern to governmental regulatory agencies (e.g., the FDA) that regulate products that may come in contact with food. Accordingly, it would be an advance in the art of paper and paperboard coating formulations to design a product with enhanced brightness that does not require the presence of phosphate and phosphonate functionalized binders.

### Summary of the Invention

In a first aspect, the present invention addresses a need in the art by providing a laminate comprising: coated or uncoated paper or paperboard; and a 5- to 35-µm thick layer of a film adhered to the coated or uncoated paper or paperboard; wherein the film comprises a) from 3 to 25 weight percent of a polymeric binder; b) from 5 to 35 weight percent TiO₂; and c) from 0.1 to 2 weight percent tetrapotassium pyrophosphate; wherein the polymeric binder comprises vinyl acetate, vinyl-acrylic, styrene-acrylic, or styrene-butadiene polymer; and wherein the weight percentages are all based on the weight of the film.

In another aspect, the present invention is a method for preparing the laminate according to the first aspect, said method comprising the step of applying a 5- to 35-µm thick layer of a composition to paper or paperboard, wherein the composition comprises an aqueous dispersion of a) from 3 to 25 weight percent polymeric binder particles; b) from 5 to 35 weight percent TiO₂; and c) from 0.1 to 2 weight percent of tetrapotassium pyrophosphate; wherein the polymeric binder particles comprise vinyl acetate, vinyl-acrylic, styrene-acrylic, or styrene-butadiene polymer particles; and wherein the weight percentages are all based on the weight of total solids of the composition.

The potassium pyrophosphate containing film shows improved brightness with a variety of binders and grades of TiO₂ as compared with films containing other ostensibly similar dispersants.

### Detailed Description of the Invention

In a first aspect, the present invention addresses a need in the art by providing a laminate comprising: coated or uncoated paper or paperboard; and a 5- to 35-µm thick layer of a film adhered to the coated or uncoated paper or paperboard; wherein the film comprises a) from 3 to 25 weight percent of a polymeric binder; b) from 5 to 35 weight percent TiO₂; and c) from 0.1 to 2 weight percent tetrapotassium pyrophosphate; wherein the polymeric binder comprises vinyl acetate, vinyl-acrylic, styrene-acrylic, or styrene-butadiene polymer; and wherein the weight percentages are all based on the weight of the film.

Preferably, the weight percent of the binder, based on the weight of total solids of the composition, is from 5 to 25 weight percent. The binder may contain up to 8 weight percent phosphate or phosphonate groups but preferably comprises a substantial absence of these groups. As used herein, the term "substantial absence of phosphate or phosphonate groups" means that the binder particles contain, based on the weight of the binder, less than 0.05 weight percent, preferably less than 0.01 weight percent, more preferably less than 0.001 weight percent, and most preferably 0 weight percent phosphate and phosphonate groups.

The aqueous composition preferably comprises from 5 to 25 weight percent, more preferably to 20 weight percent, and most preferably to 15 weight percent TiO₂, based on the weight of total solids of the composition; the TiO₂ can be rutile or anatase TiO₂ and may be untreated, or treated with inorganic silica or alumina or zirconia or a combination thereof.

The tetrapotassium pyrophosphate is preferably present in the composition at 0.2 to 0.8 weight percent, based on the weight of the composition.

The composition of the present invention advantageously includes other additives including auxiliary pigments, such as clays and calcium carbonate; rheology modifiers; hollow sphere pigments, such as ROPAQUE™ AF-1055 Hollow Sphere Pigment (A Trademark of The Dow Chemical Company or its Affiliates); natural binders, such as proteins and starch; optical brightening agents; lubricants; antifoamers; crosslinkers; and other dispersants, such as polyacrylic acid based dispersant. The particle size of auxiliary pigments useful for the composition of the present invention is preferably finer than 2 µm, more preferably 80% to 100% by weight finer than 2 µm, as measured using Sedigraph. This preferred size range is considerably smaller than what is typically used in paint formulations.

The film thickness is preferably in the range of from 5 µm, more preferably from 10 µm, to 35 µm, more preferably to 20 µm, which is about one-third to one-tenth the film thickness of typical paint coatings.

In a second aspect, the present invention is a method for preparing the laminate according to the first aspect, said method comprising the step of applying a 5- to 35-µm thick layer of a composition to paper or paperboard, wherein the composition comprises an aqueous dispersion of a) from 3 to 25 weight percent polymeric binder particles; b) from 5 to 35 weight percent TiO₂; and c) from 0.1 to 2 weight percent of tetrapotassium pyrophosphate; wherein the polymeric binder particles comprise vinyl acetate, vinyl-acrylic, styrene-acrylic, or styrene-butadiene polymer particles; and wherein the weight percentages are all based on the weight of total solids of the composition. The binder particles preferably have a volume average particle size in the range of from 50 nm, more preferably from 80 nm, to 500 nm, more preferably to 300 nm.

It has surprisingly been discovered that the laminate of the present invention imparts brightness to the paper or paperboard without additional loadings of TiO₂, and preferably using binder that contains a substantial absence or complete absence of phosphate and phosphonate groups. Moreover, as the following examples demonstrate, it has surprisingly been discovered that paper or paperboard coated with pigmented films containing TKPP consistently provide superior brightness compared to films containing ostensibly similar dispersants (TSPP or KTPP). This trend of superiority was generally observed across a variety of binders and TiO₂ types.

**Abbreviations**

| Product Name | Abbreviation |
|---|---|
| Kaomax Clay | Clay |
| RPS Vantage TiO₂ | RPS TiO₂ |
| Kronos 2063 TiO₂ | 2063 TiO₂ |
| Ti-Pure R-746 TiO₂ | R-746 TiO₂ |
| POLYCO™ 3960 Vinyl Acrylic Latex | Vinyl Acrylic latex |
| RHOPLEX™ NW-1715K Styrene Acrylic Latex | Styrene Acrylic latex |
| RHOPLEX™ RM-232D HASE Rheology Modifier | RM-232D |
| ROPAQUE™ AF-1055 Hollow Sphere Pigment | AF-1055 |
| Tetrasodium Pyrophosphate | TSPP |
| Tetrapotassium Pyrophosphate | TKPP |
| Potassium Tripolyphosphate | KTPP |

POLYCO, RHOPLEX, and ACUMER are all Trademarks of The Dow Chemical Company or its Affiliates.

### Examples

### Example 1 - Preparation of Coating with Vinyl Acrylic Latex and TKPP

RPS TiO₂ (10.5 parts by weight, 70.58% solids) was added to Clay (89.5 parts by weight, 68.24% solids), followed by addition of Vinyl Acrylic Latex (20 parts by weight, 49.8% solids), then TKPP (0.3 parts by weight, 5% solids). Additional DI water was added to adjust percent solids to 45%. The pH was then adjusted to 8-8.5 with NaOH followed by addition of RM-232D (0.6 parts by weight, 28.27% solids).

### Comparative Example 1- Preparation of Vinyl Acrylic Latex Coating without Dispersant

RPS TiO₂ (10.5 parts by weight, 70.58% solids) was added to Clay (89.5 parts by weight, 68.24% solids), followed by addition of Vinyl Acrylic Latex (20 parts by weight, 49.8% solids). Additional DI water was added to adjust percent solids to 45%. The pH was then adjusted to 8-8.5 with NaOH followed by addition RM-232D (0.6 parts by weight, 28.27% solids).

### Comparative Example 2 - Preparation of Vinyl Acrylic Latex Coating with TSPP

The method of Example 1 was used except that TSPP (0.3 parts by weight, 5% solids) was used as the dispersant instead of TKPP.

### Comparative Example 3 - Preparation of Vinyl Acrylic Latex Coating with KTPP

The method of Example 1 was used except that KTPP (0.3 parts by weight, 5% solids) was used as the dispersant instead of TKPP.

### Example 2 - Preparation of Coating with Styrene Acrylic Latex and TKPP

RPS TiO₂ (10.5 parts by weight, 70.58% solids) was added to Clay (89.5 parts by weight, 68.24% solids), followed by the addition of Styrene Acrylic Latex (20 parts by weight, 46.5% solids), then TKPP (0.8 parts by weight, 5% solids). Additional DI water was added to adjust solids to 45%. The pH was then adjusted to 8-8.5 with NaOH followed by addition of RM-232D (0.2 parts by weight, 28.27% solids).

Comparative Example 4 - Preparation of Styrene Acrylic Latex Coating without Dispersant RPS TiO₂ (10.5 parts by weight, 70.58% solids) was added to Clay (89.5 parts by weight, 68.24% solids), followed by addition of Styrene Acrylic Latex (20 parts by weight, 46.5% solids). Additional DI water was added to adjust solids to 45%. The pH was then adjusted to 8-8.5 with NaOH followed by addition of 0.2 parts of RM-232D (28.27% solids).

### Comparative Example 5 - Preparation of Styrene Acrylic Latex Coating with TSPP

The method of Example 2 was used except that TSPP (0.8 parts by weight, 5% solids) was used as the dispersant instead of TKPP.

### Comparative Example 6 - Preparation of Styrene Acrylic Latex Coating with KTPP

The method of Example 2 was used except that KTPP (0.8 parts by weight, 5% solids) was used as the dispersant instead of TKPP.

Example 3 and Comparative Examples 7-9 use the Vinyl Acrylic Latex binder with the 2063 TiO₂ which has a lower purity of TiO₂ and a higher concentration of inorganic alumina surface treatment compared to the RPS TiO₂.

### Example 3 - Preparation of Coating with Vinyl Acrylic Latex, 2063 TiO₂, and TKPP

2063 TiO₂ (10.5 parts by weight, 77.8% solids) was added to Clay (89.5 parts by weight, 68.24% solids), followed by addition of Vinyl Acrylic Latex (20 parts by weight, 49.8% solids), then TKPP (0.3 parts by weight, 5% solids). Additional DI water was added to adjust percent solids to 45%. The pH was then adjusted to 8-8.5 with NaOH followed by addition of RM-232D (0.6 parts by weight, 28.27% solids).

### Comparative Example 7 - Preparation of Vinyl Acrylic Latex and RPS TiO₂ Coating without Dispersant

2063 TiO₂ (10.5 parts by weight, 77.8% solids) was added to Clay (89.5 parts by weight, 68.24% solids), followed by addition of Vinyl Acrylic Latex (20 parts by weight, 49.8% solids. Additional DI water was added to adjust percent solids to 45%. The pH was then adjusted to 8-8.5 with NaOH followed by addition of RM-232D (0.6 parts by weight, 28.27% solids).

### Comparative Example 8 - Preparation of Coating with Vinyl Acrylic Latex, 2063 TiO₂, and TSPP

The method of Example 3 was used except that TSPP (0.3 parts by weight, 5% solids) was used as the dispersant instead of TKPP dispersant.

### Comparative Example 9 - Preparation of Coating with Vinyl Acrylic Latex, 2063 TiO₂, and KTPP

The method of Example 3 was used except that KTPP (0.3 parts by weight, 5% solids) was used as the dispersant instead of TKPP dispersant.

Example 4 and Comparative Examples 10-12 use the Vinyl Acrylic Latex binder with R-746 TiO₂, which is an alumina- and silica-surface treated TiO₂ of reduced purity compared to RPS TiO₂.

### Example 4 - Preparation of Coating with Vinyl Acrylic Latex, R-746 TiO₂, and TKPP

R-746 TiO₂ (10.5 parts by weight, 76.81% solids) was added to Clay (89.5 parts by weight, 68.24% solids), followed by addition of Vinyl Acrylic Latex (20 parts by weight, 49.8% solids), then TKPP (0.3 parts by weight, 5% solids). Additional DI water was added to adjust percent solids to 45%. The pH was then adjusted to 8-8.5 with NaOH followed by addition of RM-232D (0.6 parts by weight, 28.27% solids).

### Comparative Example 10 - Preparation of Vinyl Acrylic Latex and R-746 TiO₂ Coating without Dispersant

R-746 TiO₂ (10.5 parts by weight, 76.81% solids) was added to Clay (89.5 parts by weight, 68.24% solids), followed by addition of Vinyl Acrylic Latex (20 parts by weight, 49.8% solids). Additional DI water was added to adjust percent solids to 45%. The pH was then adjusted to 8-8.5 with NaOH followed by addition of RM-232D (0.6 parts by weight, 28.27% solids).

### Comparative Example 11 - Preparation of Coating with Vinyl Acrylic Latex, R-746 TiO₂, and TSPP

The method of Example 4 was used except that TSPP (0.3 parts by weight, 5% solids) was used as the dispersant instead of TKPP dispersant.

### Comparative Example 12 - Preparation of Coating with Vinyl Acrylic Latex, R-746 TiO₂, and KTPP

The method of Example 4 was used except that KTPP (0.3 parts by weight, 5% solids) was used as the dispersant instead of TKPP dispersant.

### Example 5 - Preparation of Coating with RPS TiO₂, AF-1055, and TKPP

RPS TiO₂ (9 parts by weight, 70.58% solids) and AF-1055 (2.16 parts by weight, 26.61% solids) were added to Clay (88.6 parts by weight, 68.24% solids), followed by addition of Vinyl Acrylic Latex (20 parts by weight, 49.8% solids), then TKPP (0.24 parts by weight, 5% solids). Additional DI water was added to adjust percent solids to 45%. The pH was then adjusted to 8-8.5 with NaOH followed by addition of RM-232D (0.6 parts by weight, 28.27% solids).

### Comparative Example 13 - Preparation of Coating with RPS TiO₂ and AF-1055 without Dispersant

RPS TiO₂ (9 parts by weight, 70.58% solids) and AF-1055 (2.4 parts by weight, 26.61% solids) were added to Clay (88.6 parts by weight, 68.24% solids), followed by addition of Vinyl Acrylic Latex (20 parts by weight, 49.8% solids). Additional DI water was added to adjust percent solids to 45%. The pH was then adjusted to 8-8.5 with NaOH followed by addition of RM-232D (0.6 parts by weight, 28.27% solids).

### Preparation of Coated Samples

The coatings were manually applied to a Leneta paint scrub panel substrate using a wire wound rod #12 and then were dried at 83 °C for 3 min. Brightness measurements were performed using Technidyne Micro S-5 Brightmeter. Brightness calibration was done using a standard (84.7 brightness reading) before measurements. Five measurements per sample were recorded and the median values reported in Table 1. The brightness data for Examples 1-2 and Comparative Examples 1-6 (C1-C6) are shown in Table 1:

**Table 1 - Brightness Comparison for Coatings Containing RPS Vantage TiO₂ and Vinyl Acrylic Latex (VA) or Styrene Acrylic Latex (SA)**

| Ex. # | 1 | C1 | C2 | C3 | 2 | C4 | C5 | C6 |
|---|---|---|---|---|---|---|---|---|
| Binder | VA | VA | VA | VA | SA | SA | SA | SA |
| Dispersant | TKPP | None | TSPP | KTPP | TKPP | None | TSPP | KTPP |
| B_{Med} | 65.1 | 59.4 | 63.4 | 65.4 | 66.1 | 59.7 | 63.1 | 64.5 |
| stdev | 0.3 | 0.3 | 0.7 | 0.3 | 0.3 | 0.4 | 0.2 | 0.3 |

The results show that the films containing TKPP (Examples 1 and 2) exhibits superior brightness as compared with the films containing TSPP (C2 and C5); the results further show that TKPP is better than KTPP for the styrene acrylate binder. The TKPP coatings (Ex 1 and 2) show about 5-6 point improvement in brightness compared to the coating with no dispersant (C1 and C4) while the TSPP coatings show only about a 3-4 point improvement in brightness.

To compare the effects of a modified TiO₂ on the performance of the coating, coated substrates were prepared using two types of surface treated TiO₂: an alumina treated TiO₂ (2063) and a silica and alumina treated TiO₂ (R 746). 2063 TiO₂ based coatings were made with a) TKPP (Example 3); b) no dispersant (C7); c) TSPP (C8); and d) KTPP (C9). R-746 TiO₂ based coatings were made with a) TKPP (Example 4); b) no dispersant (C10); c) TSPP (C11); and d) KTPP (C12).The results are summarized in Table 2.

**Table 2 - Brightness Comparisons for Coatings with VA and 2063 TiO₂ or R-746 TiO₂**

| Ex. # | 3 | C7 | C8 | C9 | 4 | C10 | C11 | C12 |
|---|---|---|---|---|---|---|---|---|
| TiO₂ type | 2063 | 2063 | 2063 | 2063 | R-746 | R-746 | R-746 | R-746 |
| Dispersant | TKPP | None | TSPP | KTPP | TKPP | None | TSPP | KTPP |
| B_{med} | 67.9 | 65.1 | 65.4 | 66.6 | 66.6 | 62.7 | 65.3 | 65.5 |
| stdev | 0.3 | 0.2 | 0.3 | 0.5 | 0.6 | 0.5 | 0.3 | 0.4 |

The data show that the film containing TKPP dispersant and alumina-treated TiO₂ (2063) (Example 3) exhibits brightness superior to the comparative films. The film containing TSPP (C8) exhibits no improvement in brightness compared to the film with no dispersant (C7), while the film containing KTPP (C9) exhibits about a 1 point increase in brightness. By comparison the TKPP film exhibits about a 3 point increase in brightness with this alumina-modified TiO₂.

A similar trend is observed in alumina and silica surface treated TiO₂ (R-746) where the film containing TKPP shows brightness superior to the comparative films. The film containing TKPP dispersant (Example 4) shows about a 4 point increase in brightness compared to the film with no dispersant (C10). By comparison, the films containing TSPP (C11) and KTPP (C12) show about a 3 point increase in brightness.

To compare the effects of TKPP in films containing TiO₂ and hollow spherical pigment, two coatings were prepared: a) a coating containing RPS TiO₂, AF-1055 and TKPP (Example 5) and b) a coating containing RPS TiO₂ and AF-1055 (C13). The results in Table 3 indicate a superior brightness performance of coatings containing TKPP (Example 3) over the coatings without TKPP (C13). Specifically, the film containing TKPP exhibits a brightness increase of about 4 points over the film without TKPP.

**Table 3 - Brightness Comparison for Coatings Containing Hollow Spherical Pigment AF-1055 with and without TKPP**

| Ex. # | 5 | C13 |
|---|---|---|
| Hollow sphere pigment type | AF-1055 | AF-1055 |
| Dispersant | TKPP | None |
| B_{med} | 65.3 | 61.3 |
| stdev | 0.5 | 0.3 |

It has surprisingly been discovered that paper or paperboard coated with pigmented films containing TKPP consistently provided superior brightness compared to films containing ostensibly similar dispersants. This trend of marked superiority was generally observed across a variety of binders and TiO₂.

## Claims

1. A laminate comprising: coated or uncoated paper or paperboard; and a 5- to 35-µm thick layer of a film adhered to the coated or uncoated paper or paperboard; wherein the film comprises a) from 3 to 25 weight percent of a polymeric binder; b) from 5 to 35 weight percent TiO₂; and c) from 0.1 to 2 weight percent tetrapotassium pyrophosphate; wherein the polymeric binder comprises vinyl acetate, vinyl-acrylic, styrene-acrylic, or styrene-butadiene polymer; and wherein the weight percentages are all based on the weight of the film.

2. The laminate of Claim 1 wherein the polymeric binder contains less than 0.05 weight percent of phosphate and phosphonate groups, based on the weight of the binder.

3. The laminate of either of Claims 1 or 2 wherein the concentration of tetrapotassium pyrophosphate is from 0.2 to 0.8 weight percent, based on the weight of total solids in the film.

4. The laminate of any of Claims 1 to 3 wherein the film further includes a clay or calcium carbonate or both.

5. The laminate of any of Claims 1 to 4 wherein the binder is a vinyl acetate polymer.

6. The laminate of any of Claims 1 to 4 wherein the binder is a styrene-acrylic polymer.

7. The laminate of any of Claims 1 to 4 wherein the binder is a styrene-butadiene.

8. The laminate of any of Claims 1 to 7 wherein the film comprises one or more additives selected from the group consisting of rheology modifiers; hollow sphere pigments; natural binders; optical brightening agents; lubricants; antifoamers; crosslinkers; and polyacrylic acid.

9. A method for preparing the laminate according to claim 1, said method comprising the step of applying a 5- to 35-µm thick layer of a composition to paper or paperboard, wherein the composition comprises an aqueous dispersion of a) from 3 to 25 weight percent polymeric binder particles; b) from 5 to 35 weight percent TiO₂; and c) from 0.1 to 2 weight percent of tetrapotassium pyrophosphate; wherein the polymeric binder particles comprise vinyl acetate, vinyl-acrylic, styrene-acrylic, or styrene-butadiene polymer particles; and wherein the weight percentages are all based on the weight of total solids of the composition.

## Patentansprüche

1. Ein Laminat, das Folgendes beinhaltet: beschichtetes oder unbeschichtetes Papier oder beschichtete oder unbeschichtete Pappe; und eine 5 bis 35 µm dicke Schicht eines Films, der an dem beschichteten oder unbeschichteten Papier oder an der beschichteten oder unbeschichteten Pappe haftet; wobei der Film a) zu 3 bis 25 Gewichtsprozent ein Polymerbindemittel, b) zu 5 bis 35 Gewichtsprozent TiO₂ und c) zu 0,1 bis 2 Gewichtsprozent Tetrakaliumpyrophosphat beinhaltet; wobei das Polymerbindemittel Vinylacetat-, Vinylacryl-, Styrolacryl- oder Styrolbutadienpolymer beinhaltet; und wobei sich alle Gewichtsprozente auf das Gewicht des Films beziehen.

2. Laminat gemäß Anspruch 1, wobei das Polymerbindemittel bezogen auf das Gewicht des Bindemittels weniger als 0,05 Gewichtsprozent Phosphat- und Phosphonatgruppen enthält.

3. Laminat gemäß entweder Anspruch 1 oder 2, wobei die Konzentration des Tetrakaliumpyrophosphats bezogen auf das Gewicht der Gesamtfeststoffe in dem Film 0,2 bis 0,8 Gewichtsprozent beträgt.

4. Laminat gemäß einem der Ansprüche 1 bis 3, wobei der Film ferner einen Ton oder Calciumcarbonat oder beides umfasst.

5. Laminat gemäß einem der Ansprüche 1 bis 4, wobei das Bindemittel ein Vinylacetatpolymer ist.

6. Laminat gemäß einem der Ansprüche 1 bis 4, wobei das Bindemittel ein Styrolacrylpolymer ist.

7. Laminat gemäß einem der Ansprüche 1 bis 4, wobei das Bindemittel ein Styrolbutadien ist.

8. Laminat gemäß einem der Ansprüche 1 bis 7, wobei der Film einen oder mehrere Zusatzstoffe, ausgewählt aus der Gruppe, bestehend aus Rheologiemodifikatoren, Hohlkugelpigmenten, natürlichen Bindemitteln, optischen Aufhellern, Gleitmitteln, Antischaummitteln, Vernetzern und Polyacrylsäure, beinhaltet.

9. Ein Verfahren zum Herstellen des Laminats gemäß Anspruch 1, wobei das Verfahren den Schritt des Auftragens einer 5 bis 35 µm dicken Schicht einer Zusammensetzung auf Papier oder Pappe beinhaltet, wobei die Zusammensetzung eine wässrige Dispersion von a) zu 3 bis 25 Gewichtsprozent Polymerbindemittelpartikeln, b) zu 5 bis 35 Gewichtsprozent TiO₂ und c) zu 0,1 bis 2 Gewichtsprozent Tetrakaliumpyrophosphat beinhaltet; wobei die Polymerbindemittelpartikel Vinylacetat-, Vinylacryl-, Styrolacryl- oder Styrolbutadienpolymerpartikel beinhalten; und wobei sich alle Gewichtsprozente auf das Gewicht der Gesamtfeststoffe der Zusammensetzung beziehen.

## Revendications

1. Un stratifié comprenant : du carton ou du papier enduit ou non enduit ; et une couche d'une épaisseur de 5 à 35 µm d'un film collé au carton ou au papier enduit ou non enduit ; dans lequel le film comprend a) de 3 à 25 pour cent en poids d'un liant polymérique ; b) de 5 à 35 pour cent en poids de TiO₂ ; et c) de 0,1 à 2 pour cent en poids de pyrophosphate de tétrapotassium ; le liant polymérique comprenant un polymère d'acétate de vinyle, de vinyle-acrylique, de styrène-acrylique, ou de styrène-butadiène ; et les pourcentages en poids étant tous rapportés au poids du film.

2. Le stratifié de la revendication 1, dans lequel le liant polymérique contient moins de 0,05 pour cent en poids de groupes phosphate et phosphonate, rapporté au poids du liant.

3. Le stratifié soit de la revendication 1, soit de la revendication 2, dans lequel la concentration en pyrophosphate de tétrapotassium va de 0,2 à 0,8 pour cent en poids, rapporté au poids de matières solides totales dans le film.

4. Le stratifié de n'importe lesquelles des revendications 1 à 3, dans lequel le film inclut de plus une argile ou du carbonate de calcium ou les deux.

5. Le stratifié de n'importe lesquelles des revendications 1 à 4, dans lequel le liant est un polymère d'acétate de vinyle.

6. Le stratifié de n'importe lesquelles des revendications 1 à 4, dans lequel le liant est un polymère de styrène-acrylique.

7. Le stratifié de n'importe lesquelles des revendications 1 à 4, dans lequel le liant est un styrène-butadiène.

8. Le stratifié de n'importe lesquelles des revendications 1 à 7, dans lequel le film comprend un ou plusieurs additifs sélectionnés dans le groupe consistant en des modificateurs de rhéologie ; des pigments à sphère creuse ; des liants naturels ; des azurants optiques ; des lubrifiants ; des anti-mousses ; des agents de réticulation ; et le poly(acide acrylique).

9. Une méthode pour préparer le stratifié selon la revendication 1, ladite méthode comprenant l'étape consistant à appliquer à du papier ou du carton une couche d'une épaisseur de 5 à 35 µm d'une composition, la composition comprenant une dispersion aqueuse de a) de 3 à 25 pour cent en poids de particules de liant polymérique ; b) de 5 à 35 pour cent en poids de TiO₂ ; et c) de 0,1 à 2 pour cent en poids de pyrophosphate de tétrapotassium ; les particules de liant polymérique comprenant des particules de polymère de vinyle-acétate, de vinyle-acrylique, de styrène-acrylique, ou de styrène-butadiène ; et les pourcentages en poids étant tous rapportés au poids des matières solides totales de la composition.
